Europäisches Patentamt

(19) European Patent Office

Office européen des brevets

(11) Veröffentlichungsnummer: **0 233 488**
**B1**

(12) EUROPÄISCHE PATENTSCHRIFT

(45) Veröffentlichungstag der Patentschrift:
04.04.90

(51) Int. Cl.⁴: **E04D 5/10,** E04D 5/12,
B32B 11/04, E21D 11/38

(21) Anmeldenummer: 87100694.6

(22) Anmeldetag: 20.01.87

(54) Bituminöse Dach- und Dichtungsbahn und Verfahren zu ihrer Herstellung.

(30) Priorität: 29.01.86 DE 3602629

(43) Veröffentlichungstag der Anmeldung:
26.08.87 Patentblatt 87/35

(45) Bekanntmachung des Hinweises auf die Patenterteilung:
04.04.90 Patentblatt 90/14

(84) Benannte Vertragsstaaten:
BE DE FR GB IT NL SE

(56) Entgegenhaltungen:
EP-A- 0 133 188
DE-A- 3 300 755
FR-A- 1 507 041
FR-A- 2 556 391
GB-A- 2 159 096
US-A- 3 230 995

(73) Patentinhaber: HOECHST AKTIENGESELLSCHAFT,
Postfach 80 03 20, D-6230 Frankfurt am Main 80(DE)

(72) Erfinder: Ernst, Gottlieb, Habichtweg 9,
D-6200 Wiesbaden-Nordenstadt(DE)
Erfinder: Rasmussen, Niels Erik, Fyrrehojen 2,
DK-4690 Hafslev(DK)
Erfinder: Schad, Alfred, Hauberisserstrasse 21,
D-6200 Wiesbaden(DE)

**Beschreibung**

Die vorliegende Erfindung betrifft eine Dachdichtungsbahn bestehend aus einer gelege-, gewebe- oder vliesartigen Trägerschicht, die beidseitig mit einer bituminösen Beschichtung überzogen ist, und einer Abdeckfolie.

Übliche Dachdichtungsbahnen, die zur Abdeckung insbesondere von Flachdachkonstruktionen verwendet werden, bestehen aus einer Trägerschicht, die beidseitig mit einer bituminösen Beschichtung überzogen ist. Um den extrem hohen Anforderungen hinsichtlich der Elastizität und ganz besonders der Witterungsbeständigkeit der Dachabdeckung nachzukommen, werden in der Regel entweder ein oxidiertes Bitumen oder insbesondere ein modifiziertes Bitumen verwendet, dessen Viskositäts- und Elastizitätsverhalten durch Beimengung von polymeren Additiven plastomerer oder elastomerer Natur modifiziert ist. Als plastomeres Additiv wird oft ein ataktisches Polypropylen oder ein Gemisch aller stereoisomerer Formen des Polypropylens verwendet. Als elastomere Additive werden Block-Copolymere von Styrol und Butadien verwendet. Gebräuchlich sind aber auch andere in ihrem Schmelzpunkt vergleichbare Polymere als Additive. Die vorstehend beschriebenen bituminösen Verbundbahnen werden oft auch als Dichtungsbahnen für unterirdische Baukonstruktionen wie z.B. Tunnels verwendet und enthalten im allgemeinen außerdem noch eine zusätzliche Folienlage aus Metall oder Kunststoff.

Als Trägerschichten bzw. Verfestigungseinlage für die bituminöse Dachdichtungsbahn werden gewebeartige Flächengebilde wie Glasfasermatten verwendet, insbesondere aber auch Wirrfaservliese aus Polymerenfasern oder -fäden z.B. aus Polyestermaterial, die in geeigneter Weise verfestigt sind. Wirrfaservliese sind deshalb bevorzugt, weil sie im Vergleich zu Geweben gute elastische Eigenschaften aufweisen, die nicht richtungsgebunden sind.

Derartige Dachdichtungsbahnen werden in einfacher Weise dadurch hergestellt, daß das Trägermaterial, vorzugsweise ein Spinnvliesstoff, bei erhöhten Temperaturen durch ein Bitumenbad gezogen wird, wobei das Trägermaterial sowohl getränkt als auch beschichtet wird. Es entsteht so ein Mehrschichtgebilde, dessen innere Schicht das Trägermaterial bildet und dessen äußere Schichten aus Bitumen bzw. modifiziertem Bitumen bestehen. Derartige bekannte Dachdichtungsbahnen sind z.B. in der DE-PS 31 45 266 und der DE-OS 34 05 109 beschrieben.

Um die bituminösen Dachdichtungsbahnen zu Rollen aufwickeln zu können, insbesondere um die zu Rollen aufgewickelten bituminösen Dachdichtungsbahnen wieder von der Rolle abziehen zu können, werden üblicherweise die von sich aus klebrigen bituminösen Oberflächen der Dachdichtungsbahnen mit partikelförmigen anorganischen Materialien wie Talkum, Sand oder Schiefer bestreut. Diese Trennmedien haben aber den Nachteil, daß sie bei der Verlegung der Dachdichtungsbahn nach dem Schweißverfahren die feste Verbindung der Dachdichtungsbahn mit dem Dach sehr stark beeinträchtigen. Es kommt hierbei oftmals zu Blasenbildungen, die letztendlich zu Undichtigkeiten führen.

Zum Verlegen und Befestigen der bituminösen Dachdichtungsbahnen auf dem Dach sind im wesentlichen zwei Verfahrensvarianten bekannt. Zum einen ist es möglich, nach dem Flammverfahren mit Hilfe offener Flammen die Dachdichtungsbahn auf einer Oberfläche anzuschmelzen und die Dachdichtungsbahn mit dieser schmelzflüssigen Oberfläche mit dem Dach zu verbinden, zum anderen kann die Dachdichtungsbahn nach dem Gießverfahren mit Hilfe von über den Schmelzpunkt hinaus erhitztem Bitumen oder Teer auf dem Dach festgeklebt werden. Beide Verfahren sind in Firmendruckschriften der Firma Börner/Bad Hersfeld, Nürnberg und Dietzenbach beschrieben. In neuerer Zeit wird mitunter auch ein Kaltklebeverfahren angewendet.

Haftungsverbesserungen zwischen dem Dach und der Dachdichtungsbahn konnten durch den Einsatz von biaxial streckorientierten Folien aus Polypropylen als Trennmedium erzielt werden. Diese Abdeckfolie schrumpft beim Abflammen zu sehr kleinen Inselchen zusammen, durch welche die Haftung in keiner Weise behindert wird.

Unter dem Begriff Abdeckfolie soll im Rahmen der vorliegenden Erfindung eine Folie verstanden werden, die auf eine Seite der bituminösen Dachdichtungsbahn aufgebracht wird und die bei der zu einer Rolle aufgewickelten Dachdichtungsbahn ein Verkleben der einzelnen Rollenlagen untereinander verhindert. Beim Abziehen der Dachdichtungsbahn von der Rolle verbleibt die Abdeckfolie als integraler Bestandteil auf der Seite der Dachdichtungsbahn, auf der sie ursprünglich aufgebracht war, und wird auch beim Verlegen der Dachdichtungsbahn auf dem Dach nicht von dieser entfernt.

Bei dem Verlegen nach dem Gießverfahren sind die mit biaxial streckorientierter Propylenfolie als Abdeckfolie versehenen Dachdichtungsbahnen jedoch ungeeignet, weil die Temperatur der schmelzflüssigen Bitumen- oder Teermasse von anfänglich 180 bis 220°C rasch abfällt und für ein Zusammenschmelzen und -schrumpfen der Polypropylenfolie nicht ausreicht. Nach dem Gießverfahren zu verlegende Dachdichtungsbahnen besitzen daher im allgemeinen eine gelochte Abdeckfolie aus niedrigschmelzendem Kunststoff. Solche Dachdichtungsbahnen sind z.B. in der DE-A-3 300 755 beschrieben. Da die Abdeckfolien dieser Dachdichtungsbahnen aber nicht biaxial streckorientiert sind, bilden sich unter den stark von Witterungsverhältnissen beeinflußten Bedingungen beim Verlegen der Dachdichtungsbahnen unvermeidlich doch immer wieder Inseln, in deren Bereich die Haftung zwischen dem Dach und der Dachdichtungsbahn nicht zufriedenstellend ist, und es kommt auch hier verschiedentlich zu Blasenbildungen und in deren Folge zu Undichtigkeiten.

Aufgabe der vorliegenden Erfindung war es, eine bituminöse Dachdichtungsbahn mit einer Abdeckfolie zu schaffen, die sich problemlos von der Rolle abziehen läßt und die sich sowohl nach dem Flammverfahren als auch nach dem Gießverfahren und dem Kaltklebeverfahren verlegen läßt, wobei nach allen Verfahren eine zufriedenstellende feste Haftung zwischen dem Dach und der Dachdichtungsbahn erreicht werden und keine Blasenbildung auftreten soll.

Gelöst wird diese Aufgabe durch eine Dachdichtungsbahn der eingangs genannten Gattung, deren kennzeichnendes Merkmal darin zu sehen ist, daß die Abdeckfolie eine biaxial streckorientierte Polypropylenfolie ist, die an zahlreichen Stellen Perforationslöcher aufweist.

Als Rohstoff für die Abdeckfolie kann übliches Polypropylen mit einem Schmelzpunkt im Bereich von 150 bis 170°C verwendet werden. Es können auch Copolymere oder Mischungen von Propylen mit anderen Alpha-Olefinen, z.B. mit Ethylen, verwendet werden, wobei der überwiegende Anteil der Copolymeren oder Mischungen aus Propyleneinheiten aufgebaut sein soll. Ferner können die Abdeckfolien einen relativ hohen Anteil an Regenerat enthalten, insbesondere bis zu 70 Gew.-%. Unter Regenerat soll im Rahmen der vorliegenden Erfindung Folienverschnittmaterial zu verstehen sein, welches bei der Folienherstellung anfällt und welches in teilweise wiederverdichteter Form dem Herstellungsprozeß zurückgeführt wird. Dem Folienrohstoff können zusätzlich die üblichen Gleitmittel, Antiadhäsive, Antistatika, Antioxidantien und ähnliche in den üblichen Mengen zugefügt werden.

Die Folienrohstoffe werden zur Herstellung der Abdeckfolie in einem Extruder aufgeschmolzen, die Schmelze wird durch eine Düse gepreßt und zu einer Vorfolie abgeschreckt. Die Vorfolie wird dann in zwei senkrecht zueinander verlaufenden Richtungen streckorientiert, bevorzugt wird sie längs- und quergestreckt. Die Folie besitzt eine Dicke im Bereich von 4 bis 50 μm, bevorzugt im Bereich von 6 bis 20 μm. Das Flächenstreckverhältnis liegt im Bereich von 30 bis 60.

Die biaxial streckorientierte Folie wird zur Herstellung der fertigen Abdeckfolie noch perforiert. Es hat sich gezeigt, daß im Hinblick auf die erfindungsgemäße Verwendung der Abdeckfolie die Flammperforation ein besonders geeignetes Perforationsverfahren ist. Das Verfahren der Flammperforation ist bekannt und besteht darin, daß die Folie über eine mit Perforationslöchern versehene und von Kühlmedium durchströmte Walze geführt wird. Gleichzeitig wird die Folie innerhalb des Umschlingungsbereichs von der der perforierten Kühlwalze abgewandten Seite mit einer Flamme beaufschlagt. Im Bereich der Perforationslöcher schmilzt die nicht mit der gekühlten Walzenoberfläche in Kontakt stehende Folie, und es entstehen die Perforationslöcher in der Folie, wobei die Folie im randnahen Bereich der Löcher kleine durch das Aufschmelzen bewirkte Verdickungen bildet. Durch diese Verdickungen in den randnahen Bereichen der Löcher wird bewirkt, daß die mechanischen Eigenschaften der mit den Perforationslöchern versehenen Folie nahezu die gleichen sind wie bei einer nicht perforierten Folie.

Die in der Abdeckfolie vorhandenen Perforationslöcher haben einen mittleren Durchmesser im Bereich von 0,5 bis 20 mm, bevorzugt von 1 bis 5 mm. Die Anzahl der Perforatinslöcher pro Flächeneinheit in der Abdeckfolie der erfindungsgemäßen bituminösen Dachschweißbahn soll so groß sein, daß von der gesamten Folienfläche 5 bis 60% auf die Löcher entfallen.

Zur Herstellung der erfindungsgemäßen bituminösen Dachdichtungsbahn genügt es, die biaxial streckorientierte und perforierte Abdeckfolie auf eine Oberfläche der flachgelegten, beidseitig mit Bitumenschichten überzogenen Trägerschicht aufzukaschieren und das Laminat dann aufzuwickeln. Die Bahnen können auch über Rollen zusammengeführt werden.

In einer besonderen Ausführungsform der Erfindung ist die Dachdichtungsbahn auf der der Abdeckfolie gegenüberliegenden freien Oberfläche mit einer Schicht enthaltend partikelförmiges anorganisches Material, insbesondere Schiefer, bedeckt, bevorzugt sind auch die Lochflächen mit Sand zu bestreuen.

Um zwischen der erfindungsgemäßen Dachdichtungsbahn und dem Dach einen noch festhafenderen Verbund zu erzielen, hat es sich als ganz besonders vorteilhaft erwiesen, wenn die erfindungsgemäß eingesetzte Abdeckfolie durch Behandlung mit einer elektrischen Coronaentladung einer haftvermitteind wirkenden Modifizierung unterworfen wird. Besonders bevorzugt soll die Abdeckfolie auf ihren beiden Seiten einer Coronabehandlung unterworfen sein. Da eine beidseitig coronabehandelte Folie jedoch eine starke Tendenz zum Verblocken zeigt und sich deshalb nicht immer ganz einwandfrei als Rollenware verarbeiten läßt, wird so vorgegangen, daß die streckorientierte Abdeckfolie zunächst einseitig coronabehandelt wird. Die einseitig coronabehandelte Folie wird dann in einem nachgeschalteten Arbeitsschritt flammperforiert, und danach wird die zweite Seite der perforierten Folie coronabehandelt. Die Oberflächenbehandlung kann auch durch die Flamme direkt erreicht werden. Durch die am Rand der Löcher durch die Flammperforation hervorgerufenen Wülste liegt die Folie nicht vollflächig auf der Folienrolle auf, die fertige Abdeckfolie kann daher zur Weiterverarbeitung bequem und ohne Handhabungsschwierigkeiten als Rollenware eingesetzt werden. Die Abdeckfolie weist insbesondere eine Oberflächenspannung im Bereich von 33 bis 45mN/m auf.

Überraschenderweise hat sich herausgestellt, daß sich mit der erfindungsgemäßen bituminösen Dachdichtungsbahn sowohl mit dem Flammverfahren als auch besonders nach dem Gießverfahren bzw. dem Kaltklebeverfahren ein dauerhaft festhaftender, witterungsbeständiger Verbund zwischen der Dachdichtungsbahn und dem Dach herstellen läßt.

Die Erfindung soll daher im folgenden beispielhaft anhand einer Zeichnung näher erläutert werden.

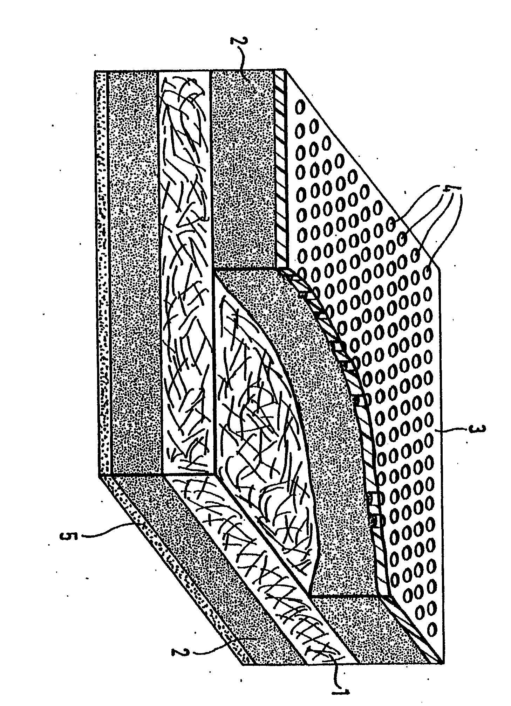

Die einzige Figur zeigt unter einem Blickwinkel von schräg oben eine teilweise delaminierte Dachdichtungsbahn gemäß der Erfindung. Die Trägerschicht 1 aus Wirrfaservlies ist dabei teilweise freigelegt und beidseitig mit bituminöser Beschichtung 2 bedeckt. Auf der Oberseite der Dachdichtungsbahn befindet sich die biaxial streckorientierte Abdeckfolie 3 aus Polypropylen, welche mit einer Vielzahl von Perforationslöchern 4 versehen ist. Nur andeutungsweise dargestellt ist auf der Unterseite der Dachdichtungsbahn die Schicht enthaltend partikelförmiges anorganisches Material 5 zu sehen.

## Patentansprüche

1. Dachdichtungsbahn bestehend aus einer gelege-, gewebe- oder vliesartigen Trägerschicht, die beidseitig mit einer bituminösen Beschichtung überzogen ist, und einer Abdeckfolie, dadurch gekennzeichnet, daß die Abdeckfolie eine biaxial streckorientierte Polypropylenfolie ist, die an zahlreichen Stellen Perforationslöcher aufweist.

2. Dachdichtungsbahn nach Anspruch 1, dadurch gekennzeichnet, daß die Abdeckfolie eine Dicke im Bereich von 4 bis 50 μm aufweist, bevorzugt von 6 bis 20 μm.

3. Dachdichtungsbahn nach Anspruch 1 oder 2, dadurch gekennzeichnet, daß die Perforationslöcher der Abdeckfolie einen mittleren Durchmesser im Bereich von 0,5 bis 20 mm besitzen, bevorzugt im Bereich von 1 bis 5 mm.

4. Dachdichtungsbahn nach einem der Ansprüche 1 bis 3, dadurch gekennzeichnet, daß die Anzahl der Perforationslöcher pro Flächeneinheit in der Abdeckfolie einer solchen Menge entspricht, daß 5 bis 60% der Folienoberfläche auf die Perforationslöcher entfallen.

5. Dachdichtungsbahn nach einem der Ansprüche 1 bis 4, dadurch gekennzeichnet, daß die Perforationslöcher in der Abdeckfolie durch Flammperforation entstanden sind.

6. Dachdichtungsbahn nach einem der Ansprüche 1 bis 5, dadurch gekennzeichnet, daß die Abdeckfolie beidseitig oberflächenbehandelt, vorzugsweise coronabehandelt ist.

7. Dachdichtungsbahn nach Anspruch 6, dadurch gekennzeichnet, daß die Abdeckfolie eine Oberflächenspannung im Bereich von 33 bis 45 mN/m aufweist.

8. Verfahren zum Herstellen einer Dachdichtungsbahn nach einem der Ansprüche 1 bis 7, bei dem eine beidseitig mit bituminösen Beschichtungen überzogene Trägerschicht aus einem gelege-, gewebe- oder vliesartigen Flächengebilde wenigstens einseitig mit einer biaxial streckorientierten Abdeckfolie aus Polypropylen überzogen wird, dadurch gekennzeichnet, daß die Abdeckfolie mit einer Vielzahl von Perforationslöchern versehen wird.

9. Verfahren nach Anspruch 6, dadurch gekennzeichnet, daß die Perforationslöcher durch Flammperforation hergestellt werden.

10. Verfahren zum Herstellen einer dauerhaft wetterbeständigen Dachabdeckung, dadurch gekennzeichnet, daß eine Dachdichtungsbahn nach einem der Ansprüche 1 bis 7 nach dem Flammverfahren verlegt wird.

11. Verfahren zur Herstellung einer dauerhaft wetterbeständigen Dachabdeckung, dadurch gekennzeichnet, daß eine Dachdichtungsbahn nach einem der Ansprüche 1 bis 7 nach dem Gießverfahren verlegt wird.

12. Verfahren zur Herstellung einer dauerhaft wetterbeständigen Dachabdeckung, dadurch gekennzeichnet, daß eine Dachdichtungsbahn nach einem der Ansprüche 1 bis 7 nach dem Kaltklebeverfahren verlegt wird.

## Claims

1. Roof sealing sheet consisting of a base layer of the type of a laid, woven or nonwoven fabric coated on both sides with a bituminous coating and a cover film, characterized in that the cover film is a biaxially oriented polypropylene film with numerous perforations.

2. Roof sealing sheet according to claim 1, characterized in that the cover film has a thickness within the range from 4 to 50 μm, preferably from 6 to 20 μm.

3. Roof sealing sheet according to claim 1 or 2, characterized in that the perforations in the cover film have an average diameter within the range from 0.5 to 20 mm, preferably within the range from 1 to 5 mm.

4. Roof sealing sheet according to any one of claims 1 to 3, characterized in that the number of perforations in the cover film per unit area is such that from 5 to 60% of the surface area of the film is accounted for by the perforations.

5. Roof sealing sheet according to any one of claims 1 to 4, characterized in that the perforations in the cover film have been formed by flame perforation.

6. Roof sealing sheet according to any one of claims 1 to 5, characterized in that the cover film has been surface-treated, preferably corona-treated, on both sides.

7. Roof sealing sheet according to claim 6, characterized in that the cover film has a surface tension within the range from 33 to 45 mN/m.

8. Process for producing a roof sealing sheet according to any one of claims 1 to 7, wherein a support layer comprising a sheetlike structure of the type of a laid, woven or nonwoven fabric and coated on both sides with bituminous coatings is covered on at least one side with a biaxially oriented cover film of polypropylene, characterized in that the cover film is provided with a plurality of perforations.

9. Process according to claim 6, characterized in that the perforations are produced by flame perforation.

10. Process for producing a permanently weather-resistant roof cover, characterized in that a roof sealing sheet according to any one of claims 1 to 7 is laid by the flame technique.

11. Process for producing a permanently weather-resistant roof cover, characterized in that a roof sealing sheet according to any one of claims 1 to 7 is laid by the casting technique.

12. Process for producing a permanently weather-resistant roof cover, characterized in that a roof sealing sheet according to any one of claims 1 to 7 is laid by the cold adhesive bonding technique.

**Revendications**

1. Panneau d'étanchéité pour couverture, composé d'une couche de support alvéolaire ou de tissu, ou de non-tissé, qui est recouverte sur ses deux faces d'un revêtement bitumineux, et d'une pellicule de recouvrement, caractérisé en ce que la pellicule de recouvrement est une pellicule en polypropylène étirée biaxialement et qui présente des perforations à de nombreux endroits.

2. Panneau d'étanchéité pour couverture selon la revendication 1, caractérisé en ce que la pellicule de recouvrement présente une épaisseur de l'ordre de 4 à 50 μm, et de façon préférentielle de 6 à 20 μm.

3. Panneau d'étanchéité pour couverture selon l'une quelconque des revendications 1 et 2, caractérisé en ce les perforations de la pellicule de recouvrement présentent un diamètre moyen de l'ordre de 0, 5 à 20 mm, et de façon préférentielle de 1 à 5 mm.

4. Panneau d'étanchéité pour couverture selon l'une quelconque des revendications 1 à 3, caractérisé en ce que le nombre de perforations par unité de surface dans la pellicule de recouvrement est tel, que les perforations représentent 5 à 60% de la surface de la pellicule.

5. Panneau d'étanchéité pour couverture selon l'une quelconque des revendications 1 à 4, caractérisé en ce que les perforations de la pellicule de recouvrement sont réalisées selon le procédé de perforation à la flamme.

6. Panneau d'étanchéité pour couverture selon l'une quelconque des revendications 1 à 5, caractérisé en ce que la pellicule de recouvrement subit un traitement sur ses deux faces, et de façon préférentielle un traitement par effet corona.

7. Panneau d'étanchéité pour couverture selon la revendication 6, caractérisé en ce que la pellicule de recouvrement présente une tension superficielle de l'ordre de 33 à 45 mN/m.

8. Procédé de fabrication d'un panneau d'étanchéité pour couverture selon l'une quelconque des revendications 1 à 7, selon lequel une couche de support recouverte sur ses deux faces d'un revêtement bitumineux, et composée d'une garniture de surface alvéolaire ou à base de tissu ou de non-tissé, est recouverte au moins sur une de ses faces d'une pellicule de recouvrement en polypropylène étirée biaxialement, caractérisé en ce que la pellicule de recouvrement présente une multitude de perforations.

9. Procédé selon la revendication 6, caractérisé en ce que les perforations sont réalisées par perforation à la flamme.

10. Procédé de fabrication d'une couverture pour toiture présentant une stabilité durable aux intempéries, caractérisé en ce qu'un panneau d'étanchéité pour couverture selon l'une quelconque des revendications 1 à 7 est mis en place selon le procédé à la flamme.

11. Procédé de fabrication d'un couverture pour toiture présentant une stabilité durable aux intempéries, caractérisé en ce qu'un panneau d'étanchéité pour couverture selon l'une quelconque des revendications 1 à 7 est mis en place selon le procédé de coulée.

12. Procédé de fabrication d'une couverture pour toiture présentant une stabilité durable aux intempéries, caractérisé en ce qu'un panneau d'étanchéité pour couverture selon l'une quelconque des revendications 1 à 7 est mis en place selon le procédé de collage à froid.